# EUROPEAN PATENT APPLICATION

(11) **EP 1 113 442 A2**
(43) Date of publication of application: **04.07.2001**
(21) Application number: 00127929.8
(22) Date of filing: 20.12.2000
(51) Int. Cl.: G11B 27/10, G11B 17/00

(54) **A method of menu-driven control of an external connected device in an audio/video apparatus**

(30) Priority: 27.12.1999 KR 9963019
(71) Applicant: LG ELECTRONICS INC., Seoul 150-010 (KR)
(72) Inventor: Yoo, Jea Yong, Kangnam-gu, Seoul 135-270 (KR)
(74) Representative: HOFFMANN - EITLE

(57) **Abstract**

The present invention relates to a method of menu-driven control of an external device connected to a digital audio/video apparatus. According to this invention, in response to user's request of a menu image for the external device, a menu image is displayed on a display of the digital audio/video apparatus, menu image including menu items associated with operations of the external device and menu items associated with the request of an image of the detailed menu of the external device. When a menu item for operations of the external device is selected, a command is transmitted to the external device to have the external device perform the desired operation. When a menu item associated with the request of the detailed menu image is chosen, the menu image is received from the external device and is then displayed on the display of the digital audio/video apparatus. This invention allows a user to conveniently, centrally examine and execute various operations or functions of external devices like DVD players that are connected to a central digital apparatus without the direct access to the external devices.

## Description

### BACKGROUND OF THE INVENTION

### 1. Field of the Invention

The present invention relates to a method of menu-driven control of an external device that is connected to a digital audio/video apparatus, and more particularly, to a method of displaying various menu items associated with functions or operations of an external device like a digital versatile disc (hereinafter DVD) player, on the display of a digital audio/video apparatus, and of remotely executing a desired functions or operations of the external device by selection of the corresponding menu item on the display.

### 2. Description of the Related Art

An analog audio/video apparatus of the conventional arts does not have communication means with which operations or function on external audio/video devices that are connected to the audio/video apparatus can be activated or controlled remotely on the audio/video apparatus. Therefore, in order to activate or execute the functions or operations of such an audio/video apparatus, a user should enter a control key that corresponds to the desired function or operation through a control unit dedicated to the external device.

Recently, it has been considered that disc players such as CD player and MD player will be equipped with a digital interface like the IEEE 1394 through which the functions or operations of an external digital device connected to a disc player are controlled by communication of digital data and commands between them.

On the other hand, standardization on the detailed specifications of the DVD is in progress. The DVD player is expected to be widely used in connection with a digital television through the IEEE 1394 interface in the near future. In this case, it is possible and desirable that retrieval of contents of the DVD and the execution of operations and functions of the DVD player are performed by selecting menu items on the display of the digital television that is connected to the DVD player.

To accomplish this needs a detailed method of displaying the menu items associated with operations or functions of the DVD player on the display of the digital television, and of remotely executing the operations or functions in response to the selection of the corresponding menu items. Because the digital television still does not support such a method, the application of the method to the digital television is preferable for convenience of users.

### SUMMARY OF THE INVENTION

It is therefore a primary object of the present invention to provide a method of displaying various menu items on the display of a digital audio/video apparatus like digital television, each menu item associated with each of the functions or operations provided by an external device that is connected to the digital audio/video apparatus through the IEEE 1394 interface, and of remotely executing a desired function or operation of the external device in response to selection of the corresponding menu item on the display.

The method of menu-driven remote control of an external device that is connected to an audio/video apparatus according to the present invention, comprises the steps of: (1) displaying a menu image on a display of the audio/video apparatus, the menu image including menu items associated with functions or operations of the external device and menu items associated with the request of an image of the detailed menu provided by the external device; (2) requesting and receiving the image of the detailed menu to the external device in response to the selection of a menu item associated with requesting the image of the detailed menu, and displaying the image of the detailed menu on the display of the audio/video apparatus.

### BRIEF DESCRIPTION OF THE DRAWINGS

The accompanying drawings, which are included to provide a further understanding of the invention, illustrate the preferred embodiments of this invention, and together with the description, serve to explain the principles of the present invention.

In the drawings:
FIG. 1 is a partial block diagram of a digital television embodying the present invention;
FIG. 2A and 2B show examples of the menu image and audio/video signal reproduced from a DVD player on the display of a digital television embodying the present invention, respectively;
FIG. 3 is a flowchart of the method of menu-driven control of a DVD player according to an embodiment of the present invention;
FIG. 4 is the format of control commands that requests the play operation of a DVD player according to the present invention;
FIG. 5A through 5C show examples of menu images and audio/video signal reproduced from a DVD player on the display of a digital television embodying the present invention;
FIG. 6 is a flowchart of the method of menu-driven control of a DVD player according to the another embodiment of the present invention;
FIG. 7 is the format of control commands that requests the detailed menus provided by a DVD player according to the present invention; and
FIG. 8 shows a united flowchart of procedures shown in FIG. 3 and FIG. 6.

### DESCRIPTION OF THE PREFFERRED EMBODIMENT

Hereinafter, preferred embodiments of the present invention will be described in detail referring to the accompanying drawings.

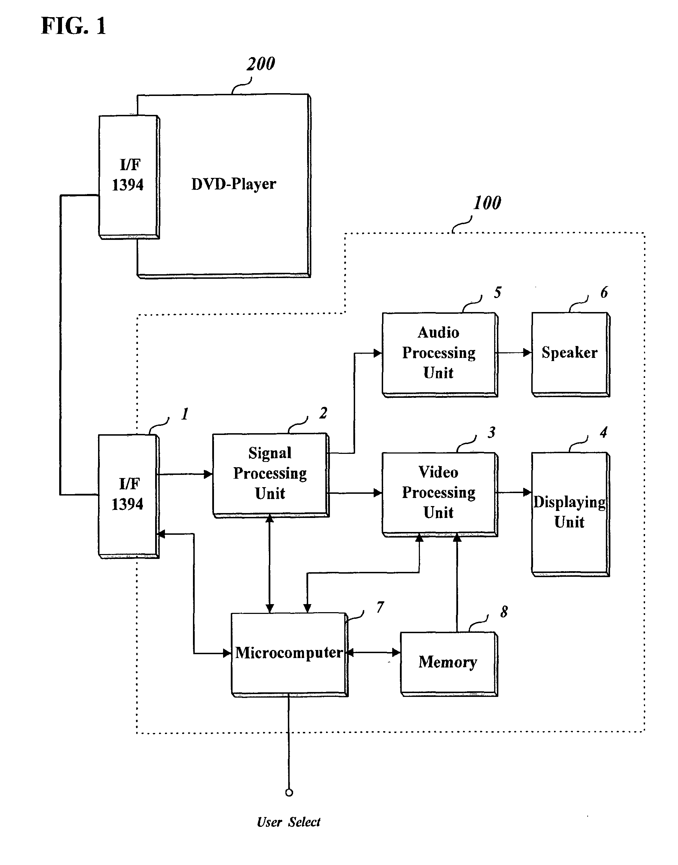

FIG. 1 shows a partial block diagram of a digital television embodying the present invention. The digital television 100 comprises an IEEE 1394 interface 1 through which it is connected to a DVD player 200; a signal processing unit 2 for decoding audio/video data from data stream that are received from the DVD player 200; an audio processing unit 5 for producing analog audio signal from the audio data stream decoded by the signal processing unit 2; a speaker 6 for generating sounds from the analog audio signal; a video processing unit 3 for producing display video signal from the video data stream; a displaying unit 4 for displaying the video signal produced by the video processing unit 3; a microcomputer 7 for controlling the operations of the constituting components above; and a memory 8 for temporarily storing data required for the control operations of the microcomputer 7 and storing data of a menu image in which menu items associated with functions or operations of the DVD player 200 are included.

In response to the request of the menu image containing menu items representing functions or operation of the DVD player 200, the menu image data are read out from the memory 8 and are then outputted to the video processing unit 3 under control of the microcomputer 7 such that the menu image is displayed on the displaying unit 4. The operations for playback of a DVD loaded in the DVD player 200 are described below in detail.

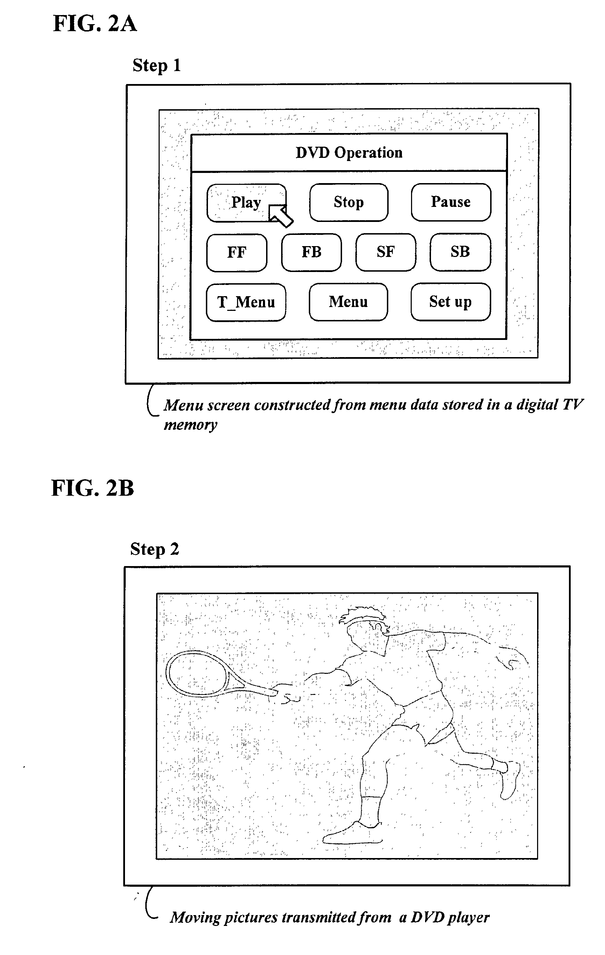

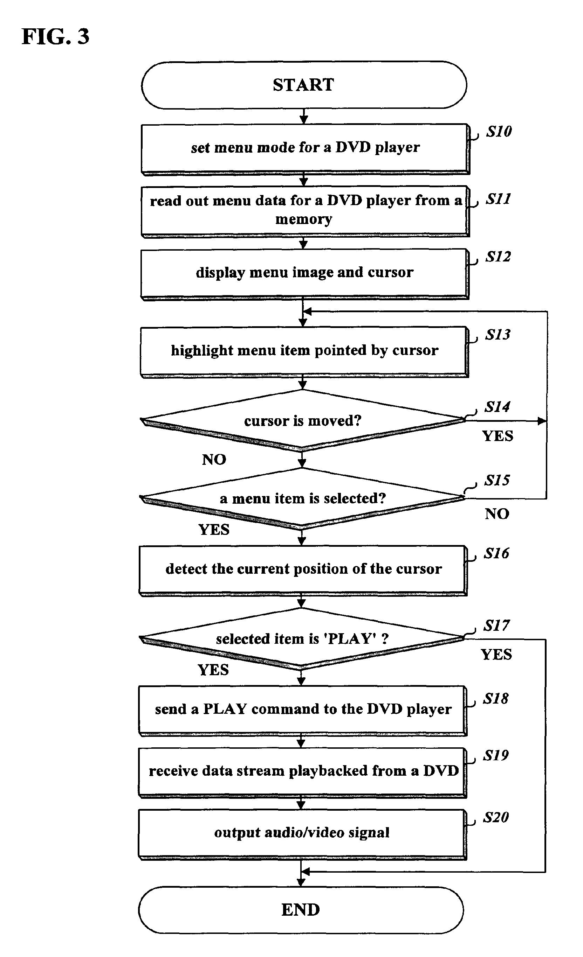

FIG. 2A depicts a menu image including the menu items associated with functions or operation of the DVD player 200. FIG. 2B shows an example of audio/video signal that is read out from a DVD and reproduced by the DVD player 200 when the menu item for playback on the menu image of FIG. 2A is selected. A procedure of the menu-driven reproduction of a DVD loaded in the DVD player 200 on the digital television 100 is shown in FIG. 3.

On receiving an input key that requests the menu image containing menu items associated with functions or operation of the DVD player 200, the digital television 100 is entered into a menu mode for the DVD player 200 by the microcomputer 7 (S10). The menu data required to display the menu mode image are read out from the memory 8 and are then displayed on the displaying unit 4, as shown in FIG. 2A, through the video processing unit 3 under control of the microcomputer 7 (S11).

As shown in FIG. 2A, the menu items on the menu mode include menu items for selecting basic operations: PLAY, STOP, PAUSE, FAST FORWARD (FF), FAST BACKWARD (FB), SKIP FORWARD (SF) and SKIP BACKWARD (SB) and menu items for requesting and obtaining the detailed menu that is transmitted from the DVD player 200. To accomplish the menu-driven request and execution of basic operations of the DVD player 100, a communication protocol between the digital television 100 and the DVD player 200 should be predetermined. Every command that is transmitted from the digital television 100 to the DVD player 200 in response to selection of a particular menu item must be predefined together with the command format. In addition, the format of commands for sending information about the position of the cursor, which is pointed by a pointing device, on the display should be predefined. The format of commands will be described later in detail.

To help a user choose a menu item, the microcomputer 7 controls the video processing unit 3 such that the cursor is displayed on the menu image (S12). In addition, when the cursor is positioned over a particular menu item, the microcomputer 7 manipulates the menu image data being used by the video processing unit 3 such that that menu item is highlighted (S13). This is done by using positional information of the area assigned to each menu item on the menu image that have been stored in the memory 8.

In order to enable the highlight operation, the microcomputer 7 keeps tracking the position of the cursor on the menu image. Therefore, when the cursor has been moved to another menu item by using a remote pointing device (S14), the corresponding menu item becomes highlighted. When a selection key is inputted while the cursor is positioned over that menu item (S15), the microcomputer 7 determines which menu item has been selected by examining the current position of the cursor (S16). For example, if the PLAY menu item for playback of a DVD loaded in the DVD player 200 is selected, a command corresponding to the PLAY menu item is constructed and is then sent to the DVD player 200 through the interface 1 (S18).

In response to the command for playback, the DVD player 200 reads out data from the DVD and then sends the data stream to the digital television 100. Once the data stream is received through the interface 1 (S19), the data stream is processed and decoded in order by the signal processing unit 2, the video processing unit 3, and the audio processing unit 5 under control of the microcomputer 7. Finally, the resulting audio/video signals that have been reproduced by the DVD player 200 are supplied to the displaying unit 4 and the speaker 6, as shown in FIG. 2B (S20).

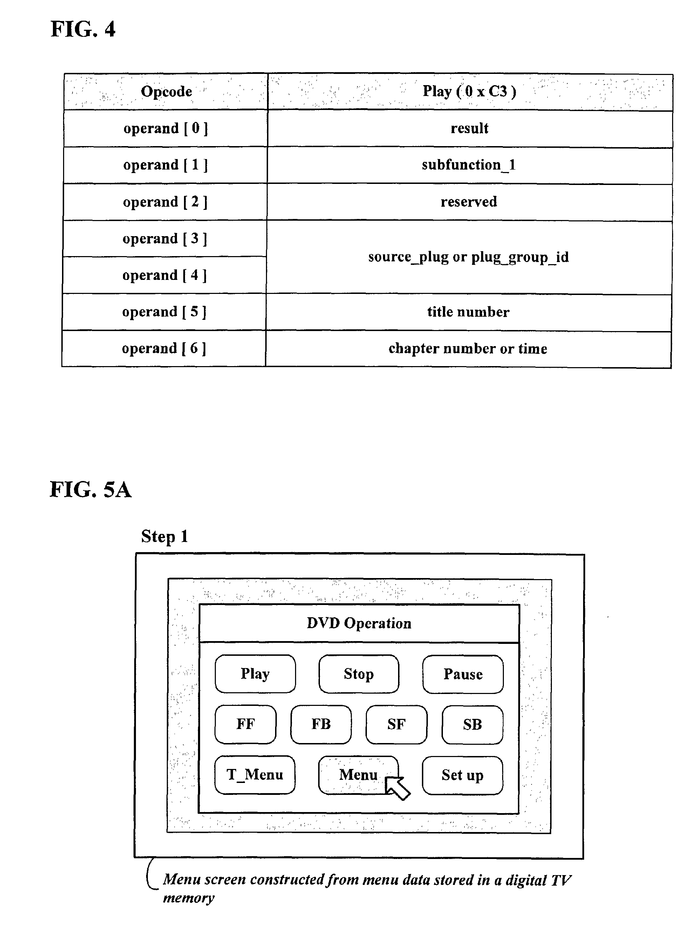

An example of the command format for the play operation of the DVD player 200 is shown in FIG. 4. To be specific, the play command consists of an operation code of 0xC3 and seven operands: operands [1]-[4] for designating which reproduction mode is requested and operands [5]-[6] for designating the contents of the DVD to playback. The contents are designated by title or chapter number, or the time.

Another embodiment of the present invention will be described below in detail referring to the accompanying drawings.

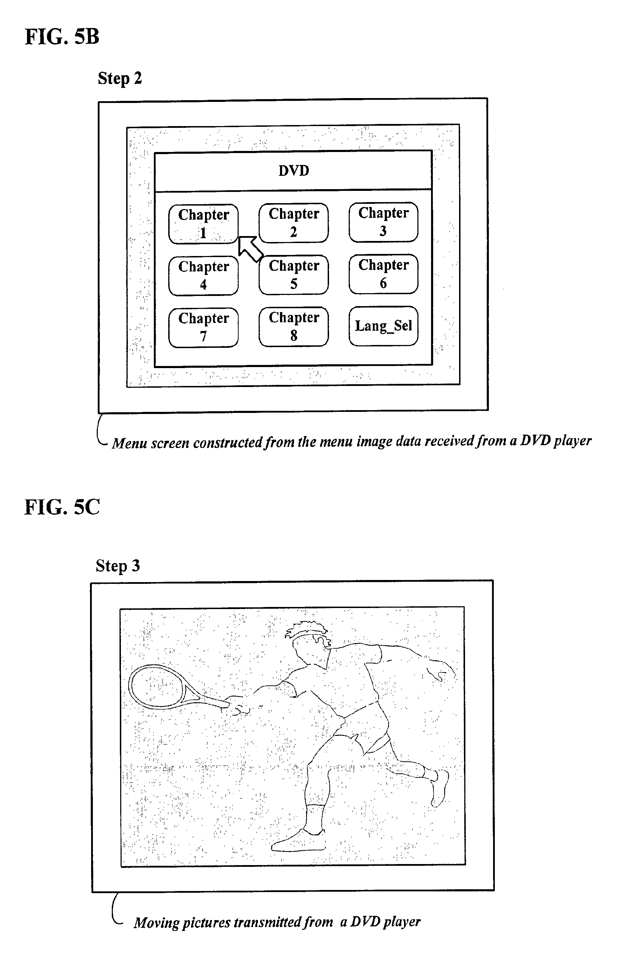

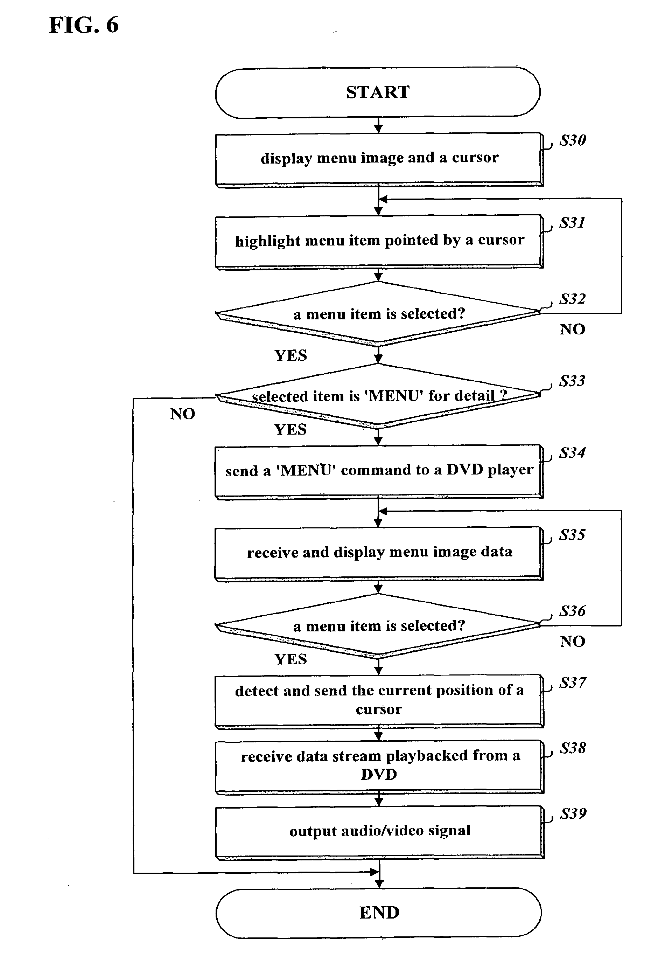

FIG. 5A depicts a menu image consisting of menu items associated with functions or operations of the DVD player 200. When a user selects the MENU item on the menu image of FIG. 5A to request the list of chapters of a particular DVD title, information required to construct an image of the chapter menu is read out from the DVD in the DVD player 200 and is then displayed on the displaying unit 4, as shown in FIG. 5B. When an menu item representing a particular chapter is selected on the chapter menu, the DVD player 200 starts to read out data related to the requested chapter and send the data stream to the digital television 100 such that the user watches the chapter through the digital television 100, as shown in FIG. 5C. FIG. 6 shows a procedure of how selection of menu items on the displaying unit 4 of the digital television 100 enables to request reproduction of a particular chapter on the DVD loaded in the DVD player 200.

On receiving an input key that requests the menu image containing menu items associated with functions or operation of the DVD player 200, the digital television 100 is entered into a menu mode for the DVD player 200 by the microcomputer 7. The menu data required to display the menu mode image are read out from the memory 8 and are then displayed on the displaying unit 4, as shown in FIG. 5A, through the video processing unit 3 under control of the microcomputer 7.

To help a user choose a menu item, the microcomputer 7 controls the video processing unit 3 such that the cursor that is pointed by a remote pointing device is displayed on the menu image (S30). In addition, when the cursor is positioned over a particular menu item, the microcomputer 7 manipulates the menu image data being used by the video processing unit 3 such that that menu item is highlighted (S31).

In order to enable the highlight operation, the microcomputer 7 keeps tracking the position of the cursor on the menu image. Therefore, when the cursor has been moved to another menu item by using a remote pointing device, the corresponding menu item becomes highlighted. When a selection key is inputted while the cursor is positioned over that menu item (S32), the microcomputer 7 determines which menu item has been selected by examining the current position of the cursor. When it is determined that the selected menu item is the MENU item for requesting a menu of general information about titles on the DVD such as title menu, audio menu, and chapter menu (S33), for example, a command for requesting the chapter menu of a particular title on the DVD is sent to the DVD player 200 through the interface 1 (S34).

In response to the request command of chapter menu, the DVD player 200 reads out general title information from the DVD and the image data are then constructed from information about chapter menu. The image data of the chapter menu are transmitted to the digital television 100 and are then displayed on the displaying unit 4 of the digital television 100 (S35), as shown in FIG. 5B.

When a user chooses a particular chapter by inputting a selection key while positioning the cursor over the corresponding chapter item (S36), the current position of the cursor is detected by the microcomputer 7. Since the image of the chapter selection menu has been received from the DVD player 200, the digital television 100 does not have positional information on each menu item on the chapter selection menu. In order to determine which menu item has been selected by the user, the microcomputer 7 constructs a command including information on the current position of the cursor and sends it to the DVD player 200 (S37).

On the other hand, the DVD player 200 has obtained positional information of the area allocated to each menu item on the chapter menu image from the DVD. On receiving the command signifying transmission of the current position of the cursor, the DVD player 200 determines which chapter menu item has been selected by using the position of the cursor and the positional information of each menu item. For example, if the user chooses a menu item for chapter #1, the DVD player 200 locates the start address of the first chapter of the desired title on the DVD and then starts to reproduce the chapter. Then, the data stream of the chapter being reproduced are sent to the digital television 100.

After the data stream are received through the interface 1 (S38), the data stream are divided into the video and audio stream through the signal processing unit 2. The audio stream are decoded by the audio processing unit 5 and are then sent to the speaker 6. At the same time, the video stream are decoded by the video processing unit 3 and are then sent to the displaying unit 4 (S39). Through the procedure above, the user can view a particular chapter being reproduced by the DVD player 200 on the digital television 100, as shown in FIG. 5C.

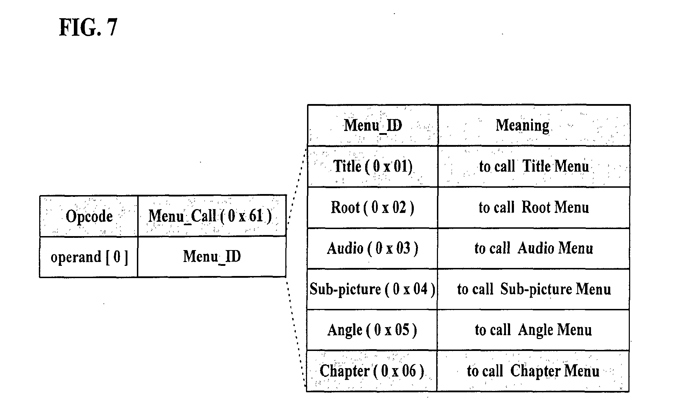

FIG. 7 shows an example of the format of request commands for the menus of general information on the titles on the DVD such as title menu, audio menu, and chapter menu. Specifically, the commands consists of an operation code of 0x61 and an operand for signifying that which menu is requested. For example, in the case that the chapter menu of a particular title is requested, a command consisting of 0x61 and 0x06 is sent to the DVD player 200. In response to the command, the DVD player reads out the chapter menu from the DVD and then transmits the image of the chapter menu to the digital television 100.

In the case where the DVD player 200 is connected to a digital audio apparatus without an image display, it is possible that information on the menus provided by the DVD are sent to the digital audio apparatus in the text form and that the text menu items are displayed on a small liquid crystal display (LCD) on the digital audio apparatus. In this case, the digital audio apparatus is equipped with a key pad consisting of arrow keys or numeric keys to enable a user to select a menu item by using arrow keys or numeric keys. Once a menu item is selected, the digital audio apparatus sends a command corresponding to the menu item to the DVD player 200 in order to request the corresponding operation.

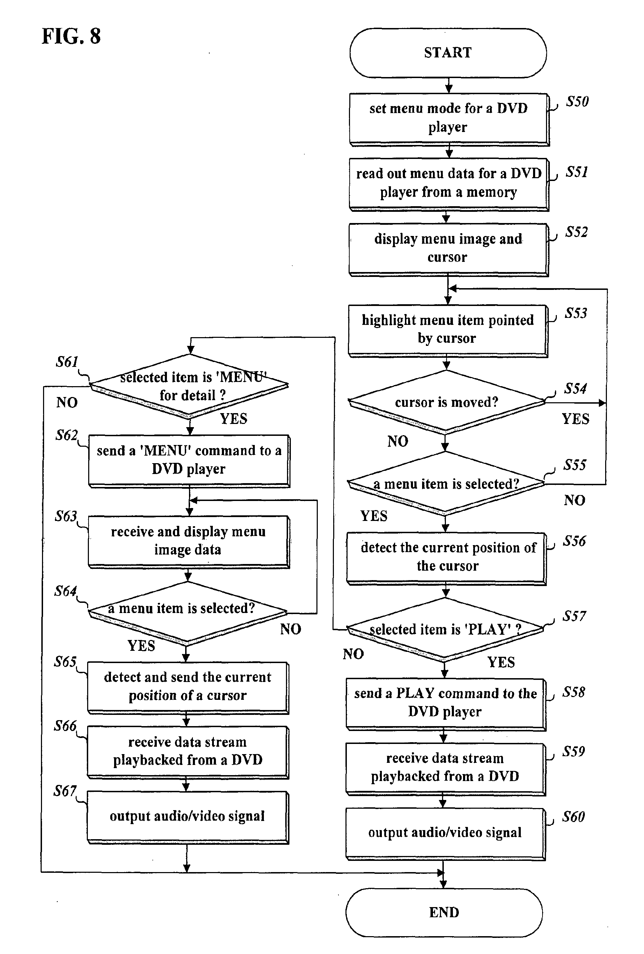

FIG. 8 shows a united flowchart of procedures shown in FIG. 3 and FIG. 6. In response to user's request, the menu image including menu items associated with functions or operations of the DVD player 200 is retrieved and displayed on the displaying unit 4 of the digital television 100 under control of the microcomputer 7. When a menu item is selected by the user, which menu item is selected is examined by the microcomputer 7 (S57, S61). When the menu item for DVD playback is chosen, the subsequent operations follow the same procedure as that of FIG. 3 (S58 through S60). When the menu item for requesting menus provided by the DVD is selected, the following operations follow the same procedure as that of FIG. 6 (S62 through S67).

Accordingly, the present invention enables a user of a digital apparatus like a digital television to conveniently request and execute various operations or functions of external digital devices that are connected to the digital apparatus without the direct control of or access to the external digital devices.

The foregoing is provided only for the purpose of illustration and explanation of the preferred embodiments of the present invention, so changes, variations and modifications may be made without departing from the spirit and scope of the invention.

## Claims

1. A method of menu-driven remote control of an external device that is connected to an audio/video apparatus, comprising the steps of:
(a) displaying a menu image including menu items associated with functions or operations of said external device and menu items associated with a request of an image of the detailed menu provided by said external device; and
(b) requesting and receiving said image of the detailed menu to said external device in response to the selection of a menu item associated with requesting the image of the detailed menu, and displaying said image of the detailed menu.

2. A method according to claim 1, wherein said menu image is generated and displayed based on data of menu items stored in a memory of said audio/video apparatus.

3. A method according to claim 1, wherein said image of the detailed menu of said external device is displayed through decoding of data that are received through a digital interface from said external device.

4. A method according to claim 3, wherein said data received from said external device are in the form of image.

5. A method according to claim 1, wherein when a menu item on said menu image displayed in said step (a) is selected, a predefined command corresponding to the selected menu item is transmitted to said external device.

6. A method according to claim 1, wherein when a menu item on said image of the detailed menu displayed in said step (b) is selected by a pointing device, information about the current position of the cursor that is pointed by said pointing device is transmitted to said external device.

7. A method of menu-driven remote control of an external device that is connected to an audio/video apparatus, comprising the steps of:
(a) displaying a menu image including basic menu items associated with functions or operations of said external device and menu items associated with a request of an image of the detailed menu provided by said external device; and
(b) transmitting command data to said external device in response to the selection of a menu item associated with functions or operations of said external device.

8. A method according to claim 7, wherein said basic menu items on said menu image displayed in said step (a) include menu items associated with playback, stop, pause, fast forward, fast backward, skip forward, skip backward operations of an information-stored medium loaded in said external device.

9. A method of menu-driven remote control of an external device that is connected to an audio/video apparatus, comprising the steps of:
(a) generating and displaying a menu image including menu items associated with functions or operations of said external device and menu items associated with a request of an image of the detailed menu provided by said external device;
(b) transmitting command data to said external device in response to the selection of a menu item associated with a request of the image of the detailed menu;
(c) displaying the image of the detailed menu by decoding data that said external device transmits in response to said command data; and
(d) transmitting to said external device information about the current position of the cursor on said image of the detailed menu, the cursor being pointed by a pointing device that is used to select a particular menu item.

10. A method according to claim 9, wherein said image of the detailed menu is image data that are constructed based on data read out from an information-stored medium loaded in said external device.

11. A method according to claim 9, wherein a menu item on said menu image displayed in said step (a) over which said cursor is positioned is highlighted compared with other menu items.

12. A method of menu-driven remote control of an external device that is connected to an audio/video apparatus, comprising the steps of:
(a) displaying a menu image including basic menu items associated with functions or operations of said external device and menu items associated with the request of an image of the detailed menu provided by said external device; and
(b) transmitting command data to said external device, in response to the selection of a menu item associated with functions or operations of said external device, to have said external device perform the desired function or operation, and requesting said image of the detailed menu to said external device, in response to the selection of a menu item associated with the request of said image of the detailed menu, receiving and displaying said image of the detailed menu.
